**Europäisches Patentamt**

**European Patent Office**

**Office européen des brevets**

(19)

(11) Veröffentlichungsnummer: **0 095 093**
**B1**

(12) # EUROPÄISCHE PATENTSCHRIFT

(45) Veröffentlichungstag der Patentschrift:
06.11.85

(21) Anmeldenummer: 83104639.6

(22) Anmeldetag: 11.05.83

(51) Int. Cl.⁴: **C 09 J 7/02**, B 44 C 1/10

(54) **Steinschlagfeste Selbstklebe-Dekorfolie.**

(30) Priorität: 25.05.82 DE 3219645

(43) Veröffentlichungstag der Anmeldung:
30.11.83 Patentblatt 83/48

(45) Bekanntmachung des Hinweises auf die Patenterteilung:
06.11.85 Patentblatt 85/45

(84) Benannte Vertragsstaaten:
DE FR GB IT

(56) Entgegenhaltungen:
US - A - 3 549 452
US - A - 4 223 054

CHEMICAL ABSTRACTS, Band 82, 1975, Seite 286, Nr. 175257j, Columbus, Ohio, US

Die Akte enthält technische Angaben, die nach dem Eingang der Anmeldung eingereicht wurden und die nicht in dieser Patentschrift enthalten sind.

(73) Patentinhaber: **Beiersdorf Aktiengesellschaft, Unnastrasse 48, D-2000 Hamburg 20 (DE)**

(72) Erfinder: **Malek, Wasfi N., Dr., Mutzenbecher Weg 15, D-2000 Hamburg 54 (DE)**

## Beschreibung

Die Erfindung betrifft eine Selbstklebe-Dekorfolie, die wärmeverformbar ist und insbesondere für die Automobilindustrie als Korrosions- und Steinschlagschutz sowie als Vibrationsdämpfung oder dergleichen geeignet ist.

Selbstklebende Dekorfolien sind bekannt und kommen als Zier- und Dekorstreifen zum Einsatz. Sie erfüllen jedoch nicht die gewünschte hohe Steinschlagfestigkeit und Wärmeverformbarkeit. Ein Schutz von Automobilen gegen Steinschlag und Korrosion wird damit nicht ausreichend erzielt. Auch selbstklebende PU-Folien sind bekannt. Diese können jedoch im Folienkörper nicht durchgefärbt werden und die Erzielung eines Metallic-Effektes, wie in der Automobilindustrie gewünscht, ist nicht möglich.

Aufgabe der Erfindung war es, hier Abhilfe zu schaffen.

Demgemäss betrifft die Erfindung eine steinschlagfeste Selbstklebe-Dekorfolie, wie sie im Anspruch 1 gekennzeichnet ist, nämlich eine wärmeverformbare, steinschlagfeste, farblose oder in vielen Farben und bestimmtem Glanzgrad herstellbare Folie aus EVA-PVC-Copolymerisat, beschichtet mit einem PU-Primer, auf den eine scherstabile, alterungsbeständige Acrylat-Selbstklebemasse aufgetragen ist. Die Oberfläche der Folie kann mit einer farblosen, wasserabweisenden Schicht aus Polyurethan-Silikon, mit verschiedenen Polyurethan-Farben oder Polyurethan-Mattierung versiegelt werden. Die Selbstklebemasse wird vorzugsweise mit dimensionsstabilem Trennpapier oder Trennfolie abgedeckt, so dass sich auch grosse Stanzzuschnitte bei Luftfeuchtigkeitseinfluss nicht verwerfen. Vorteilhafte Ausführungsformen zeigen zudem die Unteransprüche und die Beispiele.

Die erfindungsgemässe Dekorfolie eignet sich besonders bei Automobilen zum Schutz von Karosserieteilen gegen Steinschlageinwirkung und als Kratzschutz im Einstiegsbereich des Türschwellers bzw. im Kofferraumbereich an der hinteren oberen Kante. Der Einsatz der Selbstklebefolie kommt der Anforderung von Automobilfirmen entgegen, die untere Wagenpartie farblich abzusetzen und gleichzeitig in diesem Bereich einen erhöhten Steinschlagschutz zu erreichen. Bei dem Wunsch nach einem farbgleichen und steinschlagfesten Bereich kommt vorzugsweise eine farblose Folie zum Einsatz, welche die «Body-Farbe» durchscheinen lässt. Durch die Verwendung der Folie kann die Investition für eine aufwendige Speziallackierung in den Automobilwerken gespart werden. Darüberhinaus ist der Einsatz der Selbstklebefolie anstelle des Lackes preisgünstiger. Die Folie kann bei entsprechender Handhabung blasenfrei appliziert werden. Bei der Verklebung auf sphärischen Formen kann die Selbstklebefolie zur besseren Verformung mit Heissluft, z.B. mit einem handelsüblichen Föhn, erwärmt werden. Die Selbstklebefolie behält nach dem Erkalten auch auf extrem starken Wölbungen oder Vertiefungen bzw. an gewölbten Kanten ihre Form.

Die erfindungsgemässe Dekorfolie ist beim Applizieren auf sauberen und trockenen Haftgrund in der Anfangsphase noch korrigierbar, das heisst, die Folie kann ohne Deformierung wieder abgezogen und neu verklebt werden. Nach der Verklebung zieht die Selbstklebemasse innerhalb von einer Stunde fest und dauerhaft auf.

Für einen Reparaturfall kann die Selbstklebefolie jedoch mit einem gewissen Kraftaufwand wieder entfernt werden. Nach der Verklebung eines neuen Abschnittes der Folie auf die reparierte Stelle ist wegen der guten Licht- und Witterungsbeständigkeit der Folie ein Unterschied zwischen dem neuen Abschnitt und dem danebenliegenden alten Abschnitt kaum wahrnehmbar.

Ausser in der Automobilbranche kann die Folie wegen ihrer Stabilität und guten Wärmeverformbarkeit auch in anderen Industriebereichen eingesetzt werden, z.B. als Ersatz für Silikonmasse zum Fixieren vibrationsgefährdeter Maschinenteile.

Die neue, steinschlagfeste Dekorfolie bietet insbesondere Schutz gegen schädliche Steinschlageinwirkung. Sie lässt sich sowohl auf planen, als auch auf sphärisch geformten Flächen aufbringen und um gekrümmte Kanten legen. Darüberhinaus bietet die Folie den jeweils geforderten Dekoreffekt.

Die Folie kann anstelle von Lack zum Schutz von nativem Metall eingesetzt werden, wenn z.B. an einem Gebrauchtwagen im steinschlaggefährdeten Karrosseriebereich eine korrodierte Oberfläche bis auf das blanke Metall abgeschliffen und zum Schutz mit der erfindungsgemässen Folie ausgerüstet wird.

Die erfindungsgemässe Dekorfolie besteht im einzelnen bevorzugt aus folgenden Komponenten:

Der Hauptrohstoff EVA-PVC Copolymerisat, Gemisch aus K-Werten 60, 68 und 79 wird mit Polymerweichmacher, Polyester insbesondere aus Adipinsäure und Butandiol sowie mit Monomerweichmacher, $C_7$-$C_9$ Phthalat versehen und mit Ba-Cd- oder Sn- Stabilisatoren stabilisiert. Weitere Zusätze bestehen aus $CaCO_3$ und $SiO_2$ als Füllstoff, $Sb_2O_3$ als flammhemmendes Mittel sowie aus Farbpigmenten.

Foliendicke: 80-900 μm

Folienstruktur: einlagig, doubliert, tripliert

Vorstrich: nichtreaktives, lineares; aliphatisches Polyurethanharz

12%ige Lösung in 50 Teile Isopropanol; 37 Teile Toluol; 13 Teile Essigester.

Nachstrich: Mischpolymerisat aus Acrylsäureisooctylester-Methylester mit freien Carboxylgruppen entsprechend ca. 5% Acrylsäure, 31%ige Lösung in 55 Teile Essigester, 35 Teile Isopropanol, 10 Teile Hexan und Polyacrylatmassen mit ähnlicher Zusammensetzung.

Klebemasseabdeckung:

a) Silikonisiertes Trennpapier

b) Trennfolie PU-Si lackiert Folienträger wie farblose Kalenderfolie, jedoch ohne $Sb_2O_3$ oder andere Folien, die auch verformbar sind.

Oberflächenversiegelung (wahlweise):

a) Polyurethan-Silikon 25%ige Lösung in 50 Teile Isopropanol, 37 Teile Toluol, 13 Teile Essigester

b) PU-Farben am Beispiel der Farbe anthrazit-grau-metallic.

| | Gew.-Teile |
|---|---|
| nichtreaktives, lineares, aliphatisches Polyurethanharz | 62 -70 |
| Triisocyanat (Umsetzungsprodukt von Hexamethylendiisocyanat mit 17% Isocyanatgehalt) | 7 -12 |
| Dibutylzinndiacetat | 0,5- 0,8 |
| Farbpigment schwarz | 12 -20 |
| Farbpigment gelb | 0,2- 0,8 |
| Farbpigment braun | 0,3- 0,7 |
| Aluminiumpigment | 4 - 8 |

25%ige Lösung in 50 Teile Isopropanol, 37 Teile Toluol, 13 Teile Essigester

c) Polyurethan-Mattierung, z.B. gemäss DE 2.629.535

| | Gew.-Teile |
|---|---|
| nichtreaktives, lineares, aliphatisches Polyurethanharz | 50 -100 |
| Triisocyanat | 5 - 20 |
| Organopolysiloxan | 0,5 - 5 |
| Organopolysiloxan-Vernetzer | 0,05- 3 |
| Dibutylzinndiacetat | 0 - 3 |
| Mikrofeines silikatisches Mattierungs-mittel Sekundärteilchengrösse 2-15 Mikrometer) | 1 - 15 |

22%ige Lösung in 50 Teile Isopropanol, 37 Teile Toluol, 13 Teile Essigester

Die farblose und farbige Kalanderfolie kann auf in der Industrie üblichen Kalandermaschinen hergestellt werden. Die Doublierung oder Triplierung der Folie erfolgt unter Einwirkung von hohem Druck und hoher Temperatur zu einem physikalischen Verbund. Durch diese Struktur wird eine wesentlich verbesserte Steinschlagfestigkeit erreicht.

Bei der Entwicklung der erfindungsgemässen Folie war es ein besonderes Problem, die Klebemasse auf dem chemisch und physikalisch stabilen Träger zu verankern, welches schliesslich unter Zuhilfenahme eines Polyurethan-Vorstriches gelang. Das Polyurethan verankert insbesondere auf der Folie, wenn es mit der Folie während einer Verweilzeit von etwa 5 min auf etwa 120°C erhitzt wird. Z.B. wird eine 12%ige Lösung des Polyurethan-Vorstriches an einer Beschichtungsanlage für Selbstklebebänder mit Streichbalken und Trockenkanal bei 120°C während einer Verweilzeit von 5 min getrocknet. Flächengewicht des Vorstriches nach dem Trocknen: 1-10 g/m².

Vorteilhaft wird in einem separaten Arbeitsgang oder im Verbund eine 31%ige Lösung der Polyacrylatmasse aufgetragen und 5-10 min bei 80-120°C getrocknet, Massegewicht: 30-70 g/m². Am Kalander wird die Klebemasse an einer Kaschierstation mit Trennpapier oder Trennfolie eingedeckt. Im Bedarfsfalle kann das so hergestellte Material in einem weiteren Arbeitsgang auf der Folienoberfläche nach dem gleichen Verfahren wie beim Vorstrich mit einer farblosen PU-Si-Versiegelung, mit PU-Farben oder Polyurethan-Mattierung versehen werden, Flächengewicht nach dem Trocknen: 10-50 g/m².

Die Oberflächenversiegelung kann aber auch zu Beginn der Fertigung auf die Folie aufgetragen werden.

Das zum Ballen gewickelt Material wird an Schneidemaschinen in Längsrichtung auf geeignete Masse aufgeschnitten und für den Endverbraucher in Zuschnitte aufgestanzt.

Bei Abdeckung mit verformbarer Trennfolie kann die erfindungsgemässe Folie ausser in Zuschnitten auch im Tiefziehverfahren unter Wärmeeinwirkung in jede erforderliche Form gebracht werden. Eine mit Klebemasse und Trennfolie ausgerüstete 300-900 µm Trägerfolie lässt sich auf in der Industrie üblichen Triefziehmaschinen im Vakuum-Tiefziehverfahren während einer Wärmeeinwirkung von 150-550°C über 8-25 s einwandfrei verformen. Triefziehvorgänge mit der Folie sind ebenfalls im Vakuum-Druckverfahren möglich, sowohl in Negativ- als auch in Positiv-Form. Diese Form bleibt anschliessend in ihrer Dimension stabil und kann nach Abziehen der Trennfolie als vorgepasstes Teil auf ausserordentlich verformten Hafrtgründen verklebt werden.

De Klebfähigkeit der erfindungsgemässen Folie bleibt auch bei Lagerung über lange Zeit stabil. Die Kombination der Folie und Selbstklebemasse ist so abgestimmt, dass zwischen der Klebemasse und in der Folie enthaltendem Weichmacher keine Wechselwirkungen auftreten, welche üblicherweise eine starke Klebkraftdepression hervorrufen.

Die Erfindung wird nachfolgend an einigen Beispielen erläutert, ohne damit eine Beschränkung auszudrücken.

*Beispiel 1:*

Unter Verwendung folgender Rohstoffe

| | Gew.-Teile |
|---|---|
| EVA-PVC-Copolymerisat K-Wert 68, 10% EVA | 31 |
| EVA-PVC-Copolymerisat K-Wert 60, 10% EVA | 24 |
| EVA-PVC-Copolymerisat K-Wert 79, 50% EVA | 23 |
| Polymethylmethacrylat | 2 |
| Polyester aus Adipinsäure und Butandiol | 12 |
| $C_7C_9$ Phthalat | 2,5 |
| Ba-Cd Stabilisator | 2,5 |
| Ca $CO_3$ | 5 |
| $SiO_2$ | 1 |
| $Sb_2O_3$ | 1 |
| Russ | 1 |

wird nach dem angeführten Verfahren an einer Beschichtungsanlage für Selbstklebebänder eine Folie von 300 µm Stärke, einlagig, in der Farbe schwarz, glatt, mit 5 g/m² Vorstrich und 54 g/m² Nachstrich beschichtet und mit silikonisiertem Trennpapier eingedeckt.

Das so hergestellte Selbstklebematerial wurde in 19 mm breite Längsstreifen geschnitten und bei Normalklima sowie zur beschleunigten Alterung bei 40°C gelagert.

Die Klebstreifen behalten ihre Klebfähigkeit innerhalb eines Toleranzbereiches selbst nach langer Lagerung unverändert bei.

Die Messungen der klebtechnischen Daten führten zu folgenden Ergebnissen:

|  | Klebkraft auf Stahl N/cm (siehe Fig. 1) | Abzugskraft N/cm (siehe Fig. 2) |
|---|---|---|
| *Lagerung bei Normalklima* | | |
| Nach 1 Woche | 9,74 | 0,05 |
| Nach 1 Monat | 9,11 | 0,08 |
| Nach 3 Monaten | 11,16 | 0,06 |
| Nach 6 Monaten | 11,62 | 0,08 |
| Nach 12 Monaten | 11,24 | 0,08 |
| *Lagerung bei 40° C* | | |
| Nach 1 Monat | 7,40 | 0,08 |
| Nach 3 Monaten | 9,36 | 0,13 |

Im Steinschagprüftest erreichte die Folie einen Beständigkeitsfaktor von 1,3.

*Steinschlagprüftest*

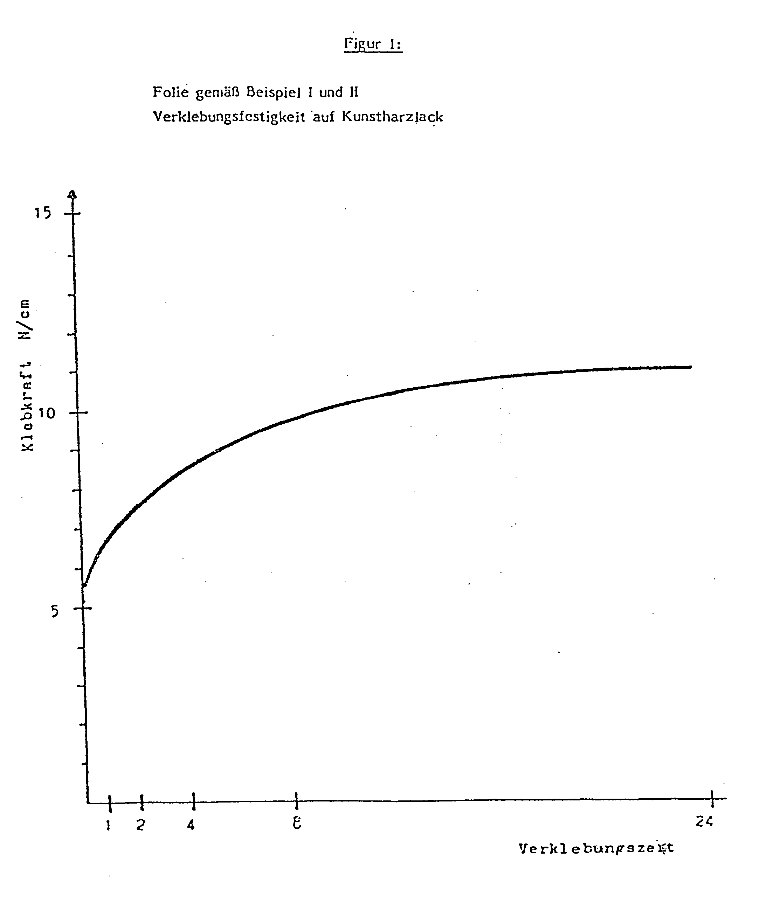

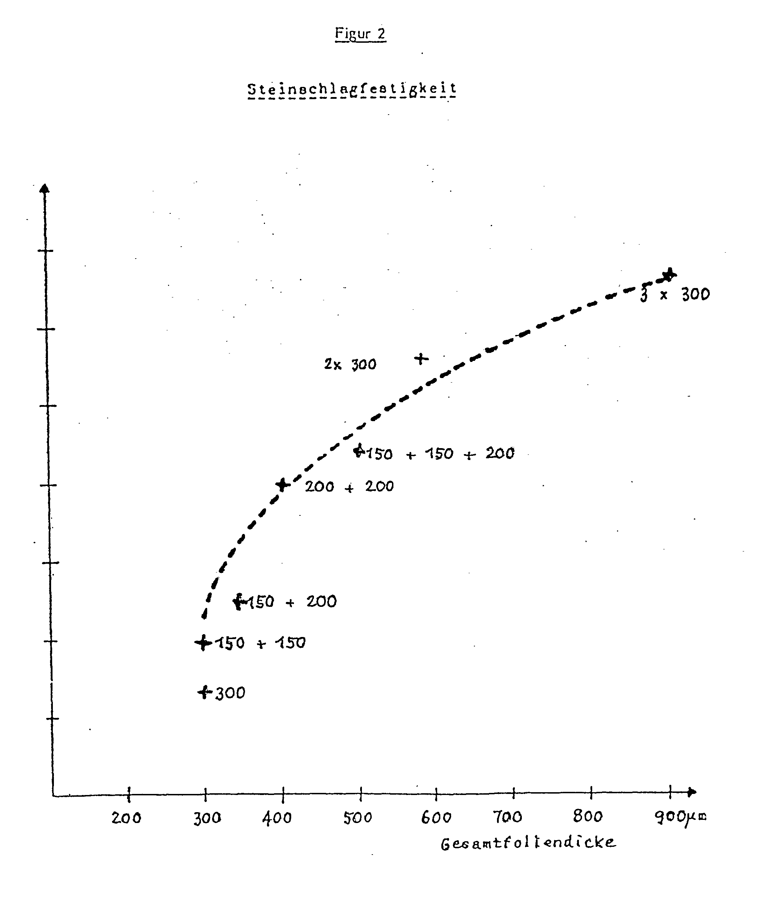

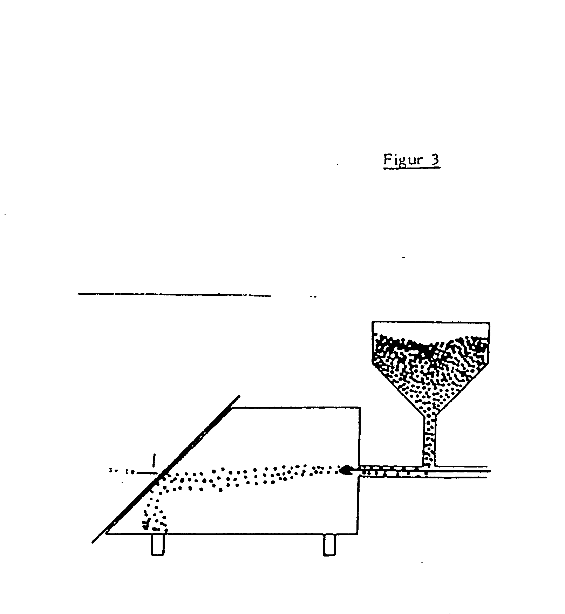

Die Prüfung der Steinschlagfestigkeit erfolgte in einem Gerät gemäss Skizze in Fig. 3.
Beschussgut: Edelsplitt 2/4 mm
Menge: 3,5 kg je Zyklus
Dauer: ca. 10' je Zyklus
Prüfabstand: 30 cm + 10 cm Beschussrohrlänge
Pressluftdruck: 3 atü

Die zu prüfende Folie wird im Format 10×10 cm auf eine Glasplatte geklebt. Die Probeplatte wird bei Normalklima mit der Folienseite nach innen gemäss Skizze aufgeklebt und befestigt.

Der Pressluft hahn wird geöffnet und das Reduzierventil bei offenem Luftstrom auf 3 atü eingestellt. 3,5 kg Edelsplitt 2/4 werden in den Trichter geschüttet, vom Luftstrom erfasst und auf die Folienprobe geschleudert, Zeitdauer jeweils ca. 10 min.

Nach jedem Prüfzyklus werden die Proben auf Beschädigungen untersucht. Nach dem ersten Durchschlag wird die Zahl der Durchgänge festgehalten.

Der Beständigkeitsfaktor wird aus der Anzahl der Beschusszyklen ermittelt.

Beständigkeistfaktor 1 = 6 Beschusszyklen.

Definition der Klebkraft auf Stahl

Die Messung der Klebkraft erfolgt auf Prüfplatten aus rostfreiem Stahl, (V2 A, 18/8, Zusammensetzung: Kohlenstoff < 0,12%, Nickel > 8%, Chrom > 17%, Brinell-Härte: 130-200) von der Grösse 200×50×2mm mit gerauhter Oberfläche, Schmirgel VSM/Vitex, CP-331. Fepa-Körnung 240, unter einem Abzugswinkel 180°. Hierzu wird eine Zugprüfmaschine mit einer Abzugsgeschwindigkeit von 300 mm/min benutzt.

Nach Klimatisierung des zu prüfenden Materials und der Messschiene 24 h auf 22 ± 1° C bei 50 ± relativer Feuchte wird ein max. 25 mm breiter Klebestreifen nach Entfernung der Abdeckung blasenfrei auf die mit Aceton gereinigte Stahlplatte geklebt und mit einer Stahlwalze von 80 mm Durchmesser mit 2 kg Belastung aufgerollt (5 × hin und her, Geschwindigkeit 10 m/min).

Sofort nach dem Aufrollen wird die Stahlplatte senkrecht in die untere Einspannklemme der Zugprüfmaschine eingespannt und das überstehende Ende des Prüfreifens in der oberen Einspannklemme befestigt. Unmittelbar danach wird die Zugprüfmaschine in Gang gesetzt. Je Prüfstreifen werden in etwa gleichem Abstand fünf Messwerte registriert. Erster Wert: nach mindestens 25 mm Abzugslänge, letzter Wert: 25 mm vor Ende der Stahlplatte. Aus den erhaltenen Messwerten wird der Mittelwert in N/cm angegeben.

Definition der Abzugskraft

Die Messung der Abzugskraft des Abdeckmaterials von der Klebemasse wid an einer Zugprüfmaschine mit einer Abzugsgeschwindigkeit von 300 mm/min vorgenommen.

Das zu prüfende Material wird 24 h auf 22 ± 1° C bei 50 ± % relativer Feuchte klimatisiert.

Von einem max. 25 mm breiten, abgedeckten Prüfstreifen wird das Eindeckmaterial in die obere, der nicht mehr abgedeckte Klebestreifen in die untere Klemme der Zugprüfmaschine eingespannt, Klemmbackenabstand 50 mm. Beide Streifen werden unter einem Winkel von ca. 90 ≥ 20° voneinander abgezogen. Während des Abziehens ist darauf zu achten, dass der vorgeschriebene Abzugswinkel eingehalten wird; dieses erfolgt mit Hilfe eines dünnen Stabes (z.B. Bleistift) durch leichtes Anheben oder Herunterdrücken der verklebten Probe.

Nachdem 2-3 cm abgezogen sind, beginnt man mit dem Ablesen des Zeigeranschlages. Es werden in gleichen Abständen fünf Werte abgelesen, die sich über eine Strecke von ca. 15 cm verteilen. Aus den abgelesenen Werten wird das arithmetische Mittel errechnet. Die Abzugskraft wird in N/cm angegeben.

*Beispiel 2:*

Unter Verwendung der im Beispiel 1 beschriebenen Rohstoffe wird nach dem angeführten Verfahren an einer Beschichtungsanlage für Selbstklebebänder eine Folie von 300 µm Stärke, einlagig, in der Farbe schwarz, genarbt, mit 4 g/m² Vorstrich, 15 g/m² PU-Si-Oberflächenversiegelung farblos und 46 g/m² Nachstrich beschichtet und mit silikonisiertem Trennpapier eingedeckt. Das so hergestellte Selbstklebematerial wurde in 19 mm breite Längsstreifen geschnitten und bei Normalklima sowie zur beschleunigten Alterung bei 40° C gelagert. Die Klebestreifen behalten ihre Klebfähigkeit innerhalb eines Toleranzbereiches selbst nach langer Lagerung unverändert bei.

Die Messungen der klebtechnischen Daten führten zu folgenden Ergebnissen:

|  | Klebkraft auf Stahl N/cm (siehe Fig. 1) | Abzugskraft N/cm (siehe Fig. 2) |
|---|---|---|
| *Lagerung bei Normalklima* | | |
| Nach 1 Woche | 10,41 | 0,05 |
| Nach 1 Monat | 6,32 | 0,05 |
| Nach 3 Monaten | 9,38 | 0,08 |
| Nach 6 Monaten | 9,32 | 0,07 |
| Nach 12 Monaten | 11,18 | 0,08 |
| *Lagerung bei 40° C* | | |
| Nach 1 Monat | 6,26 | 0,05 |
| Nach 3 Monaten | 7,44 | 0,06 |

Im Steinschlagprüftest erreichte die Folie einen Beständigkeitsfaktor von 1,3.

Technische Daten der Selbstklebebänder aus den Beispielen 1 und 2 in tabellarischer Form:

|  | Beispiel 1 | Beispiel 2 |
|---|---|---|
| Zugfestigkeit (N/cm)<br>längs<br>quer | 2020<br>1470 | 1930<br>1570 |
| Reissdehnung (%)<br>längs<br>quer | 241<br>243 | 215<br>250 |
| Temperaturbeständigkeit bei 24 h Verklebungslagerung bei 80° C auf Lackblech | kein Schrumpf, keine Faltenbildung | |
| Lichtechtheit analog DIN 54 004 | > 7 | > 7 |
| Xenotest 150<br>Schwarztafeltemperatur 60° C<br>Einstellung Aussenbewitterung<br>1000 Std. | i.O. | i.O. |
| 1000 Std. mit Wasserbesprühung | i.O. | i.O. |
| Verklebungsfestigkeit<br>Klebkraft/Lack (N/cm)<br>(Abzugswinkel 180° Geschwindigkeit 100 mm/min)<br>Sofortmessung | 5,1 | 5,1 |
| Messung nach 24 h Lagerung bei 22° C | 6,0 | 6,0 |
| 15 min bei 100° C | 12,1 | 10,5 |
| 120 h bei 80° C | 13,0 | 11,3 |
| 15 min bei 100° C und 16 h bei −30°, Prüfhung bei −30° | 15,0 | 15,0 |
| 240 h 40° C/100% rel. Feuchte mit Schwitzwassereinfluss | keine Unterwanderung der Verklebung | |
| Kraftstoffbeständigkeit (10maliges Eintauchen in Prüfkraftstoff)<br>50 Vol. % Toluol<br>30 Vol. % Isooctan<br>15 Vol. % Diisobutylen<br>5 Vol. % Äthanol | keine Veränderung | |
| Waschmittelbeständigkeit (24 h Verklebungslagerung in 1%iger Waschmittellösung bei 70° C) | keine Unterwanderung der Verklebung | |
| Salzsprühnebelprüfung 240 Std. | i.O. | i.O. |
| Brandverhalten: | entspricht den Anforderungen der US-Kraftfahrzeug-Sicherheitsnorm 302 | |

*Beispiel 3:*

Unter Verwendung der in Beispiel 1 beschriebenen Rohstoffe wird nach dem angeführten Verfahren an einer Labor-Beschichtungsanlage eine Folie von 300 µm Stärke, doubliert aus 150 µm und 150 µm, in der Farbe schwarz, glatt, mit 3 g/m² Vorstrich und 32 g/m² Nachstrich beschichtet und mit silikonisiertem Trennpapier eingedeckt. Das so hergestellte Selbstklebematerial wurde einem Steinschlagprüftest unterzogen. Dabei erreichte es einen Beständigkeitsfaktor von 2,0. Die Steinschlagfestigkeit ist um 54% höher als bei einlagiger 300 µm-Folie.

*Beispiel 4:*

Unter Verwendung der in Beispiel 1 beschriebenen Rohstoffe wird nach dem angeführten Verfahren an einer Labor-Beschichtungsanlage eine Folie von 400 µm Stärke, einlagig, schwarz, glatt, 3 g/m² Vorstrich und 50 g/m² Nachstrich beschichtet und mit Trennfolie eingedeckt. Das so hergestellte Material wurde einem Steinschlagprüftest unterzogen. Dabei erreichte es einen Beständigkeitsfaktor von 2,5. Die Steinschlagfestigkeit ist um 92% höher als bei einlagiger 300 µm-Folie.

*Beispiel 5:*

Unter Verwendung der im Beispiel 1 beschriebenen Rohstoffe wird nach dem angeführten Verfahren an einer Beschichtungsanlage für Selbstklebebänder eine Folie von 500 µm Stärke, tripliert aus 2×150 µm und 200 µm, in der Farbe schwarz mit 2 g/m² Vorstrich, und 48 g/m² Nachstrich und 32 g/m² PU-Farbe anthrazitgrau-metallic beschichtet und mit Trennpapier eingedeckt.

Durch die Beschichtung mit PU-Farblack anthrazitgrau-metallic wird die Folie versiegelt, um eine Veredelung der Oberfläche zu erreichen.

Das so hergestellte Selbstklebematerial wurde einem Steinschlagprüftest unterzogen. Dabei erreichte es einen Beständigkeitsfaktor von 4,3. Die Steinschlagfestigkeit liegt um 231% höher als bei einlagiger 300 μm-Folie.

*Beispiel 6:*

Unter Verwendung der in Beispiel 1 beschrieben Rohstoffe wird nach dem angeführten Verfahren an einer Beschichtungsanlage für Selbstklebebänder eine Folie von 900 μm Stärke, tripliert aus 3×300 μm, in der Farbe schwarz mit 5 g/m² Vorstrich, 14 g/m² PU-Si-Oberflächenversiegelung farblos und 70 g/m² Nachstrich beschichtet und mit Trennfolie eingedeckt.

Das so hergestellte Selbstklebematerial wurde an einer Vakuum-Tiefziehmaschine bei einer Strahlungswärme von 550°C während 24 s auf einer Positif-Form tiefgezogen. Dabei erreichte die Folienoberfläche auf einer entgegengesetzten Seite der Strahlung eine Temperatur von 120°C. Die Kühlzeit betrug 41 s. Das daraus resultierende Teil blieb formstabil. Die Trennfolie konnte einwandfrei entfernt werden. Das selbstklebende Teil konnte ohne Schwierigkeiten auf ein stark sphärisch geformtes Automobil-Karosserieteil als Steinschlagschutz aufgeklebt werden. Im Steinschlagprüftest erreichte die Folie einen Beständigkeitsfaktor von 6,5. Die Steinschlagfestigkeit liegt um 400% höher als bei einlagiger 300 μm-Folie.

*Beispiel 7:*

Unter Verwendung der in Beispiel 1 beschriebenen Rohstoffe wird nach dem angeführten Verfahren an einer Beschichtungsanlage für Selbstklebebänder eine Folie von 600 μm Stärke, doubliert aus 2×300 μm in der Farbe schwarz mit 5 g/m² Vorstrich, 9 g/m² Polyurethan-Mattierung und 53 g/m² Nachstrich beschichtet und mit Trennfolie eingedeckt. Das so hergestellte Selbstklebematerial wurde an einer Vakuum-Druck-Tiefziehmaschine bei einer Strahlungswärme von 155°C (oben) und 150°C (unten) während 10 s auf einer Positiv-Form tiefgezogen. Die Kühlzeit betrug im gleichen Takt 10 s. Das daraus resultierende Teil blieb formstabil. Die Trennfolie konnte einwandfrei entfern werden. Der Glanzgrad der Polyurethan-Mattierung blieb durch die Einwirkung der Hitze und durch das Tiefziehen unbeeinträchtigt bei 22% (Reflektometer Messkopf 60°). Im Steinschlagprüftest erreichte die Folie einen Beständigkeitsfaktor von 5,5. Die Steinschlagfestigkeit liegt um 325% höher als bei einlagiger 300 μm-Folie.

*Beispiel 8:*

Unter Verwendung folgender Rohstoffe

| | | |
|---|---|---|
| EVA-PVC-Copolymerisat K-Wert 68, | 10% Eva | 34 |
| EVA-PVC-Copolymerisat K-Wert 60, | 10% Eva | 26 |
| EVA-PVC-Copolymerisat K-Wert 79, | 50% Eva | 25 |
| Polymethylmethacrylat | | 4 |
| Polyester, insbesondere aus Adipinsäure und Butandiol | | 14 |
| C₇C₉ Phthalat | | 3 |
| Sn-Stabilisator | | 2 |

wird nach dem angeführten Verfahren an einer Labor-Beschichtungsanlage eine Folie von 400 μm Stärke, doubliert aus 2×200 μm, farblos, glatt, mit 4 g/m² Vorstrich und 50 g/m² Nachstrich beschichtet und mit silikonisiertem Trennpapier eingedeckt, wie dies in Beispiel 1 beschrieben ist.

Nach der Verklebung auf Autolack war die ursprüngliche Autolackfarbe gut zu erkennen. Im Gegensatz zu dem Dekorcharakter bei dem Einsatz von farbiger Folie blieb hier, wie gewünscht, die «Body-Farbe» erhalten.

Im Steinschlagprüftest erreichte die Folie einen Beständigkeitsfaktor von 4,0.

Die Steinschlagfestigkeit liegt um 208% höher als bei einlagiger 300 μm-Folie.

**Patentansprüche**

1. Steinschlagfeste Selbstklebe-Dekorfolie, bestehend aus
   a) einem wärmeverformbaren Träger aus einer EVA-PVC-Copolymerisat-Kalanderfolie von 80-900 μm Dicke,
   b) beschichtet mit einem PU-Primer, auf den
   c) eine scherstabile, alterungsbeständige Acrylat-Selbstklebemasse aufgetragen ist, auf der sich
   d) eine Abdeckung aus Trennpapier oder Trennfolie befindet.

2. Dekorfolie nach Anspruch 1, enthaltend
   e) eine Oberflächenversiegelung auf der nichtbeschichteten Seite des Trägers, bestehend aus PU-Silikon, PU-Farbe oder PU-Mattierung.

3. Dekorfolie nach Anspruch 1, enthaltend als Träger a) aus EVA-PVC-Copolymerisat ein solches aus 30-35 Gew.-Teilen EVA-PVC-Copolymerisat mit K-Wert 68 und 10% EVA, 23-28 Gew.-Teilen EVA-PVC-Copolymerisat mit K-Wert 60 und 10% EVA, 22-26 Gew.-Teilen EVA-PVC-Copolymerisat mit K-Wert 79 und 50% EVA, 1-4 Gew.-Teilen Polymethylmethacrylat, 10-14 Gew.-Teilen Polyester, neben Weichmachern, Farbstoffen, Stabilisatoren, Verarbeitungshilfsmitteln und Füllstoffen.

4. Dekorfolie nach Anspruch 1, enthaltend als Träger a) eine einlagige, doublierte, oder triplierte Kalanderfolie.

5. Dekorfolie nach Anspruch 1, enthaltend als Primer b) einen Vorstrich aus einem nicht-reaktiven, linearen, aliphatischen PU-Harz.

6. Dekorfolie nach Anspruch 1, enthaltend als Selbstklebemasse
   c) ein Mischpolymerisat aus Acrylsäureisooctylester-Methylester mit freien Carboxylgruppen, entsprechend etwa 5% Acrylsäure.

7. Dekorfolie nach Anspruch 1, enthaltend als Abdeckung d) ein silikonisiertes Trennpapier oder eine Trennfolie, wie eine Silikon-lackierte PU-Folie.

## Revendications

1. Feuille décorative auto-adhésive résistant au choc des pierres, consistant en

a) un support thermodéformable fait d'une feuille calandrée d'un copolymère EVA-PVC d'une épaisseur de 80 à 900 μm,

b) revêtue d'une couche de fond de PU, sur lequel

c) est appliquée une masse d'acrylate auto-adhésive résistant au vieillissement et stable au cisaillement, sur laquelle est appliquée

d) une couverture faite d'un papier de garde ou d'une feuille de garde.

2. Feuille décorative suivant la revendication 1, contenant

e) une couche de doublage superficiel sur la face non revêtue du support et consistant en PU-silicone, PU couleur ou PU rendu mat.

3. Feuille décorative suivant la revendication 1, contenant comme support a) en copolymère EVA-PVC, un support consistant en 30 à 35 parties en poids de copolymère EVA-PVC ayant un indice K de 68 et à 10% d'EVA, en 23 à 28 parties en poids d'un copolymère EVA-PVC d'un indice K de 60 et à 10% d'EVA et en 22 à 26 parties en poids d'un copolymère EVA-PVC d'un indice K de 79 et à 50% d'EVA, en 1 à 4 parties en poids de poly(méthacrylate de méthyle), en 10 à 14 parties en poids de polyester, outre des plastifiants, des colorants, des stabilisants, des auxiliaires de mise en œuvre et des charges.

4. Feuille décorative suivant la revendication 1 contenant comme support a) une feuille calandrée à couche simple, à couche double ou à couche triple.

5. Feuille décorative suivant la revendication 1 contenant comme couche de fond b) une couche de fond en résine de polyuréthanne aliphatique linéaire, non réactive.

6. Feuille décorative suivant la revendication 1 contenant comme masse auto-adhésive c) un copolymère d'acrylate d'isooctyle et d'acrylate de méthyle ayant une teneur en radicaux carboxyle libres correspondant à environ 5% d'acide acrylique.

7. Feuille décorative suivant la revendication 1 contenant comme couverture d) un papier de garde siliconé ou une feuille de garde telle qu'une feuille de PU vernie à la silicone.

## Claims

1. Self-adhesive decorative sheet resistant to the impact of stones, consisting of

a) a thermoformable base composed of an EVA-PVC copolymer calendered sheet 80-900 μm thick,

b) coated with a PU primer, onto which is applied

c) a self-adhesive acrylate material resistant to shearing and to ageing, on which is located

d) a covering consisting of release paper or release film.

2. Decorative sheet according to Claim 1, containing

e) a surface seal on the non-coated side of the base, consisting of PU silicone, PU paint or PU matt finish.

3. Decorative sheet according to Claim 1, containing an EVA-PVC copolymer base a) composed of 30-35 parts by weight of EVA-PVC copolymer with a K-value of 68 and 10% of EVA, 23-28 parts of weight of EVA-PVC copolymer with a K value of 60 and 10% of EVA, 22-26 parts by weight of EVA-PVC copolymer with a K value of 79 and 50% of EVA, 1-4 parts by weight of polymethyl methacrylate and 10-14 parts by weight of a polyester, together with plasticizers, dyes, stabilizers, processing auxiliaries and fillers.

4. Decorative sheet according to Claim 1, containing as the base a) a single-ply, two-ply or three-ply calendered sheet.

5. Decorative sheet according to Claim 1, containing as the primer b) a primer consisting of a non-reactive linear aliphatic PU resin.

6. Decorative sheet according to Claim 1, containing as the self-adhesive material c) an isooctyl acrylate/methyl acrylate copolymer with free carboxyl groups, corresponding to approximately 5% of acrylic acids.

7. Decorative sheet according to Claim 1, containing as the covering d) a siliconised release paper or a release film, such as a silicone-coated PU film.

Figur 1:

Folie gemäß Beispiel I und II
Verklebungsfestigkeit auf Kunstharzlack

Figur 2

Steinschlagfestigkeit

Figur 3